# FASCICULE DE BREVET EUROPEEN

(11) **EP 2 981 421 B1**
(45) Date de publication et mention de la délivrance du brevet: **28.06.2017**
(21) Numéro de dépôt: 14718629.0
(22) Date de dépôt: 24.03.2014
(51) Int. Cl.: B60B 33/00

(54) **ROULETTE POUR MEUBLE OU ANALOGUE AVEC MOYENS DE BLOCAGE**
GLEITROLLE FÜR MÖBEL ODER DERGLEICHEN MIT VERRIEGELUNGSVORRICHTUNGEN
CASTOR FOR FURNITURE OR THE LIKE, WITH LOCKING MEANS

(30) Priorité: 02.04.2013 FR 1300742
(43) Date de publication de la demande: 10.02.2016
(73) Titulaire: Tente Roulettes Polymeres - Bruandet, 39700 La Barre (FR)
(72) Inventeur: DAYT, Patrick, F-25000 Besançon (FR)
(74) Mandataire: Flavenot, Bernard
(86) Numéro de dépôt international: PCT/FR2014/000059
(87) Numéro de publication internationale: WO 2014/162066

(56) Documents cités:
- EP-A2- 2 556 768
- WO-A1-2012/035213
- DE-A1- 10 318 308
- FR-A1- 2 895 702

## Description

La présente invention concerne les roulettes destinées à être associées à tout objet du type meuble pour faciliter son déplacement, qui comportent essentiellement deux roues, un carter destiné à supporter et éventuellement protéger les roues, et un pivot qui assure la liaison entre le carter et le meuble.

Nombre de telles roulettes trouvent une application particulièrement avantageuse pour aider au déplacement, notamment mais non exclusivement, du matériel et du mobilier hospitaliers, par exemple les tables roulantes, fauteuils, chariots, déambulateurs, etc., mais aussi des valises ou analogues.

La structure d'une telle roulette doit donc être conçue de façon qu'elle permette de déplacer facilement ces meubles dans toutes les directions. En particulier, pour cela, elle comporte généralement deux roues montées parallèles, des moyens pour permettre à ces deux roues de tourner autour d'un axe horizontal par rapport au carter dans le but de rouler sur le sol pour assurer le déplacement du meuble en translation rectiligne, ainsi que des moyens pour que le carter puisse pivoter autour d'un axe sensiblement vertical par rapport au meuble pour permettre à la roulette de prendre toutes directions par rapport au meuble et donc pour pouvoir facilement diriger ce meuble en suivant des courbes.

Cependant, par exemple lorsque le meuble est arrivé en fin de déplacement dans sa position définitive, il est généralement nécessaire de l'empêcher de se déplacer, ne serait-ce qu'accidentellement. Il est donc préférable que les roulettes montées sur ce meuble soient alors automatiquement bloquées au moins en roulement pour les empêcher de rouler sur le sol, plus particulièrement dans le cas des tables, déambulateurs, valises, etc., mais que leur déblocage ne soit obtenu qu'à la suite d'une manoeuvre volontaire de l'utilisateur.

Une telle roulette est par exemple décrite dans les EP2556768, FR2895702 et DE10318308, mais plus particulièrement dans le WO2012/035213.

En plus des moyens définis ci-dessus, elle comporte des moyens de blocage-déblocage des deux roues par rapport au carter. Ces moyens de blocage-déblocage comportent au moins un ensemble de crans femelles réalisés sur au moins l'une des deux faces des roues qui sont tournées vers le carter, un levier monté en coopération avec le carter, au moins un ergot mâle complémentaire des crans femelles, des moyens pour solidariser l'ergot mâle avec le levier, le levier étant monté en rotation sur le carter de façon qu'il soit apte à prendre au moins deux positions, une première position dans laquelle l'ergot mâle ne coopère avec aucun des crans femelles et une seconde position dans laquelle l'ergot mâle est positionné dans un des crans femelles, un lien de traction, et des moyens pour lier une première extrémité du lien de traction avec le levier pour commander le passage du levier de sa seconde à sa première position.

Cette roulette fonctionne de façon très correcte, mais la présente invention a pour but de réaliser une roulette dont la structure comporte, par rapport à celle décrite ci-dessus, un plus petit nombre de pièces constitutives et permette de réaliser la roulette de façon plus industrielle en étant plus facilement assemblée, lui conférant un coût de revient plus faible.

Plus précisément, la présente invention a pour objet une roulette à blocage comprenant :
- un carter,
- au moins deux roues aptes à prendre contact avec une surface donnée,
- des moyens pour monter les deux dites roues en rotation par rapport au carter sur un arbre défini selon un premier axe sensiblement parallèle à ladite surface, de façon qu'au moins une partie du dit carter soit située entre les deux dites roues,
- un pivot défini selon un second axe, ledit pivot étant monté en coopération avec ledit carter de façon que ledit second axe soit à la fois sensiblement orthogonal au premier axe et contenu dans un premier plan parallèle aux deux plans passant respectivement par les deux roues et situé entre ces deux plans, ledit pivot émergeant du carter par une première face du dit carter, et
- des moyens de blocage-déblocage des deux roues par rapport au carter, ces dits moyens de blocage-déblocage comportant :
   - au moins un ensemble de crans femelles réalisés sur au moins l'une des deux faces des dites roues qui sont tournées vers ladite partie du carter,
   - un levier monté en coopération avec ledit carter,
   - au moins un ergot mâle complémentaire des crans femelles du dit ensemble de crans femelles,
   - des moyens pour solidariser ledit ergot mâle avec ledit levier,
   - ledit levier étant en outre monté en coopération avec ledit carter de façon qu'il soit apte à prendre au moins deux positions, une première position dans laquelle ledit ergot mâle ne coopère avec aucun des crans femelles et une seconde position dans laquelle ledit ergot mâle est positionné dans un des crans femelles,
   - des moyens élastiques pour tendre à amener constamment ledit levier dans sa seconde position,
   - un lien de traction, et
   - des moyens pour lier une première extrémité du lien de traction avec ledit levier pour commander le passage du levier de sa seconde à sa première position,
   caractérisée par le fait qu'elle comporte en outre :
   - une cavité réalisée dans ladite partie du carter, ladite cavité comportant une face latérale de forme sensiblement cylindrique et une ouverture située sur une seconde face de ladite partie du carter opposée à la première face d'où émerge ledit pivot, ladite cavité étant en outre réalisée dans cette partie de carter de façon que ledit arbre traverse de part en part cette cavité,
   et par le fait que :
   - ledit levier est constitué par un tiroir comportant une face avant, une face arrière et une face latérale, la face latérale ayant une section transversale sensiblement complémentaire de la section transversale de la face latérale de ladite cavité définie dans un plan parallèle au premier axe et perpendiculaire au second axe, de façon que le tiroir soit apte à coulisser en translation dans ladite cavité entre ses première et seconde positions suivant une direction perpendiculaire au dit premier axe, sa face arrière étant en regard de l'intérieur de ladite cavité.

D'autres caractéristiques et avantages de l'invention apparaîtront au cours de la description suivante donnée en regard des dessins annexés à titre illustratif mais nullement limitatif, dans lesquels :

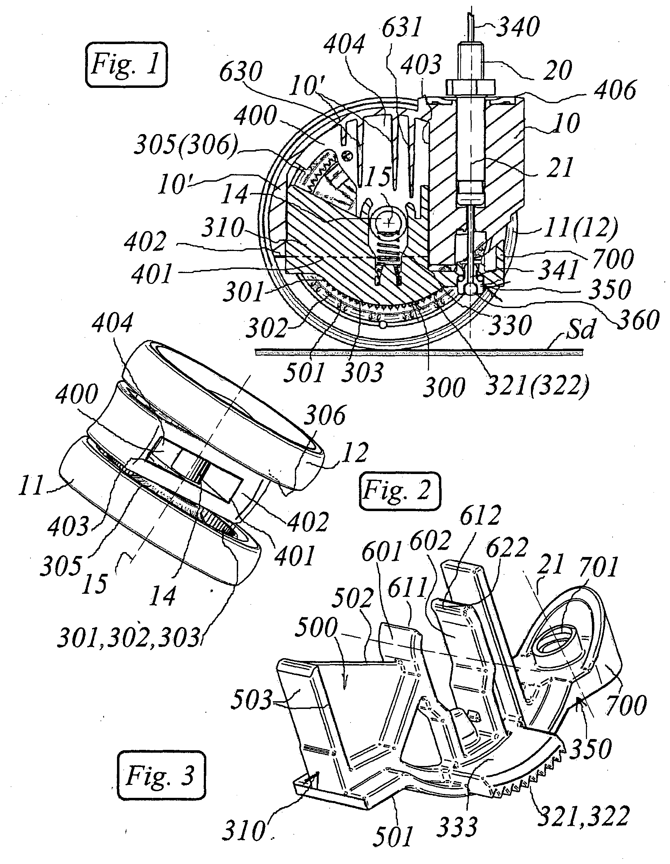

Les figures 1 à 3 représentent différentes vues d'un mode de réalisation de la roulette selon l'invention, à savoir : la figure 1 qui est une vue en coupe transversale schématique, en plan vertical, et la figure 2 qui est une vue de dessous et en perspective de la roulette selon la figure 1, ne comportant pas la partie tiroir dont un mode de réalisation est illustré, vu de côté et en perspective, sur la figure 3.

Il est bien précisé que, dans la présente description, si l'adverbe "sensiblement" est associé à un qualificatif d'un moyen donné, ce qualificatif doit être compris au sens strict ou approché.

La présente invention concerne une roulette du type à blocage-déblocage qui se bloque automatiquement sans une manoeuvre particulière et qui ne peut être débloquée que si elle est soumise à une action extérieure volontaire.

La roulette selon l'invention comprend un carter 10, de type connu, par exemple d'une forme comme celle qui est représentée sur les figures, au moins deux roues 11, 12 aptes à prendre contact avec une surface donnée Sd, et des moyens pour monter ces deux roues en rotation par rapport au carter sur un arbre 14 lié au carter et défini selon un premier axe 15 sensiblement parallèle à la surface Sd quand la roulette roule sur cette surface.

Il est bien précisé que, par arbre 14, au sens de la présente description, il est compris tout arbre rotatif ou fixe, disposé ou pas dans une gaine, ou situé à côté d'une entretoise, qui définit dans son ensemble l'axe de rotation 15 autour duquel les deux roues 11, 12 tournent lorsque la roulette se déplace sur le sol Sd.

De plus, le montage en rotation des roues 11, 12 sur le carter 10 est réalisé de façon qu'au moins une partie 10' du carter soit située entre les deux roues.

La roulette comporte aussi un pivot 20 défini selon un second axe 21. Ce pivot permet de lier la roulette à l'extrémité d'un montant du meuble sur lequel doit être montée la roulette, comme un matériel ou un mobilier hospitalier, par exemple une table, un déambulateur, etc., ou bien une valise ou analogue.

Ce pivot 20 est monté en coopération avec le carter 10 de façon que le second axe 21 soit à la fois sensiblement orthogonal au premier axe 15, situé avantageusement à une distance non nulle de ce premier axe 15 et contenu dans un plan parallèle aux deux plans passant respectivement par les deux roues 11, 12 et situé entre ces deux plans.

Ce pivot peut être fixe par rapport au carter 10, et dans ce cas il est constitué d'une patte ou analogue, ou monté rotatif par rapport au carter, et dans ce cas la roulette comporte des moyens pour monter ce pivot en rotation par rapport au carter 10 selon le second axe 21. Ces moyens sont connus en eux-mêmes et peuvent avantageusement comporter essentiellement des moyens de roulement du type "à billes", "à aiguilles", ou analogues.

La roulette comporte en outre des moyens de blocage-déblocage 300 d'au moins une roue, avantageusement des deux roues 11, 12, par rapport au carter. Selon une caractéristique de l'invention, ces moyens de blocage-déblocage comportent de préférence deux ensembles de crans femelles 301, 302, 303, ... plus particulièrement visibles sur la figure 1, réalisés respectivement sur les deux faces 305, 306 des roues 11, 12 qui sont tournées vers la partie 10' du carter 10 située entre ces roues. De façon très préférentielle, les crans femelles sont réalisés sur tout le pourtour des faces en regard des deux roues 11, 12 pour assurer de façon certaine le blocage de la roulette comme explicité ci-après, quelle que soit la position angulaire de la roulette dans sa rotation par rapport au carter.

Ces moyens de blocage comportent aussi un levier 310 monté en coopération avec le carter 10 et au moins un ergot mâle, de préférence deux ergots mâles 321, 322, solidaires du levier 310 et complémentaires des crans femelles 301, 302, 303, ... respectivement des deux ensembles de crans femelles.

Le levier 310 est monté en coopération par rapport au carter 10 de façon qu'il soit apte à prendre au moins deux positions, une première position, dans laquelle les deux ergots 321, 322 ne coopèrent avec aucun des crans femelles 301, 302, 303, ..., comme illustré sur la figure 1, et une seconde position, non illustrée, dans laquelle les deux ergots 321, 322 sont positionnés dans deux crans femelles respectivement des deux ensembles de crans femelles.

Il est bien précisé que la qualification des crans par les termes "femelles" et "mâles" n'est qu'une facilité de désignation, et qu'il est bien évident que les crans mâles peuvent se trouver sur les roues et les crans femelles sur le levier, ou le tiroir 500 comme défini ci-après, et inversement.

Pour que la roulette soit automatiquement bloquée sans manoeuvre particulière, comme défini ci-avant, les moyens de blocage-déblocage 300 comportent en outre des moyens élastiques 330 pour tendre à amener constamment le levier 310 dans cette seconde position.

Pour que la roulette soit débloquée par une action extérieure volontaire, il est prévu un lien de traction 340 et des moyens, dont un mode de réalisation est décrit ci-après, pour lier une première extrémité 341 du lien de traction 340 au levier 310 pour commander son passage de sa seconde à sa première position.

Selon une caractéristique de l'invention, la roulette comporte en outre une cavité 400 réalisée dans la partie 10' du carter 10, cette cavité comportant une face latérale 403 de forme sensiblement cylindrique et une ouverture 401 située sur une seconde face 402 de la partie 10' du carter 10 opposée à la première face 406 d'où émerge le pivot 20, cette cavité 400 étant en outre réalisée dans cette partie 10' de carter de façon que l'arbre 14 la traverse de part en part. ,

Selon une autre caractéristique de l'invention, le levier, dont la fonction première est définie ci-dessus, est constitué, par un tiroir 500 comportant une face avant 501, une face arrière 502 et une face latérale 503, figure 3.

La face latérale 503 présente une section transversale sensiblement complémentaire de la section transversale de la face latérale 403 de la cavité 400 définie dans un plan parallèle au premier axe 15 et perpendiculaire au second axe 21, de façon que le tiroir soit apte à coulisser en translation dans la cavité 400 entre ses deux première et seconde positions suivant une direction perpendiculaire au premier axe 15 et parallèle au second axe 21, la face arrière 502 du tiroir étant celle qui est en regard de l'intérieur 404 de cette cavité 400.

Selon une autre caractéristique de l'invention, de façon tout à fait préférentielle, la roulette comporte, figures 1 et 3, deux pattes 601, 602 solidaires de la face arrière 502 du tiroir 500. Ces deux pattes sont respectivement situées dans deux plans parallèles aux premier 15 et second 21 axes, et sont distantes l'une de l'autre d'une distance au moins égale au diamètre de l'arbre 14. En outre, elles sont agencées sur la face arrière 502 du tiroir de façon que, quand le tiroir est entre ses première et seconde positions, figure 1, y compris ces positions, l'arbre 14 soit situé entre les deux pattes.

De façon avantageuse, selon une caractéristique de l'invention, au moins l'une des deux pattes 601, 602 comporte une courbure rentrante 611, 612 tournée vers l'autre patte de façon que la distance entre l'extrémité libre de cette courbure et l'extrémité libre de l'autre patte soit inférieure au diamètre de l'arbre 14.

De façon encore plus avantageuse, chacune des deux pattes comporte, comme illustré sur les figures 1 et 3, une courbure rentrante 611, 612 tournée vers l'autre patte de façon que la distance entre les extrémités libres de ces deux courbures soit inférieure au diamètre de l'arbre 14.

Dans le cas de ces deux caractéristiques définies ci-dessus, de façon très avantageuse, la roulette comporte en outre au moins une nervure 630, 631 réalisée dans la cavité 400. Cette nervure, qui sert de renfort pour le carter, peut éventuellement être agencée de façon que, lors du déplacement du tiroir 500 de sa seconde position à sa première position, au moins l'une des deux pattes 601, 602 vienne en appui sur la nervure par glissement, entre la nervure et l'arbre 14, pour qu'elle soit maintenue proche de l'arbre 14, c'est-à-dire sensiblement constamment au contact de l'arbre 14, mais sans une pression très importante, juste suffisante pour que la distance entre les extrémités libres en regard des deux courbures reste inférieure au diamètre de l'arbre.

De façon préférentielle, selon une réalisation possible et relativement simple, les moyens élastiques 330 pour tendre à amener constamment le levier 310 dans sa seconde position sont constitués par un ressort en compression, par exemple un ressort hélicoïdal, monté entre la face arrière 502 du tiroir 500 et l'arbre 14, comme illustré sur la figure 1.

Enfin, en fonction des caractéristiques structurelles de la roulette décrites ci-dessus, les moyens 350 pour lier une première extrémité 341 du lien de traction 340 avec le levier 310 définis ci-avant, comportent, figure 1 et 3, une portion de plaque 700 ou analogue solidaire en saillie du tiroir 500 de façon que cette portion de plaque soit en regard du carter 10 et soit en outre coupée par le second axe 21, et un orifice traversant 701 réalisé dans cette portion de plaque 700 en étant sensiblement centré sur ce second axe 21, cet orifice traversant ayant une section au moins égale à celle du lien 340, la première extrémité 341 de ce lien étant alors passée dans l'orifice traversant.

Ces moyens de liaison 350 comportent en outre une tête d'épaulement 360, comme une butée à bille ou analogue, ayant une section transversale supérieure à celle de l'orifice traversant. Cette tête d'épaulement 360 est solidaire par tous moyens, soudage, sertissage, collage, etc., de la première extrémité 341 du lien 340 émergeant de l'orifice 701, et est en outre agencée sur cette extrémité 341 de façon qu'elle soit positionnée en appui sur le bord de l'orifice traversant 701 qui est opposé à celui qui est en regard du carter 10, figure 1.

Les éléments constitutifs de cette roulette sont réalisés avec des matériaux qui sont ceux couramment utilisés pour la réalisation des roulettes de même type de l'art antérieur. Aussi dans l'unique souci de simplifier la présente description, ces matériaux ne seront pas plus amplement précisés ici.

La roulette selon l'invention fonctionne de la façon suivante :
Il est supposé que la roulette est montée par exemple sur un montant d'un déambulateur formé, de façon classique, d'un assemblage de montants, tubes, etc. La roulette est fixée à une extrémité d'un des montants, via le pivot 20, avec le lien de traction 340 passé à l'intérieur du montant (éventuellement, si nécessaire, dans une gaine comme celle pour un frein de bicyclette) et débouchant, par son extrémité émergente, par exemple à côté d'une poignée de guidage du déambulateur qui doit être serrée par l'utilisateur lorsqu'il se déplace avec ce déambulateur. L'extrémité émergente du lien de traction est montée en coopération avec, par exemple, une poignée du type "poignée de frein", comme celles qui se trouvent sur les guidons des bicyclettes.

Quand le déambulateur n'est pas utilisé, le ressort 330 agit sur le tiroir 500 pour qu'il prenne sa seconde position, comme illustré sur la figure 1, avec les deux ergots mâles 321, 322 logés dans deux crans respectivement des deux ensembles de crans femelles 301, 302, 303, ... empêchant de ce fait les roues 11, 12 de rouler sur la surface du sol Sd. Le déambulateur est donc fixe par rapport au sol Sd et l'utilisateur potentiel peut même s'appuyer sur lui en relative sécurité, sans craindre que ce déambulateur ne se déplace accidentellement.

Par contre, s'il veut se déplacer avec l'aide du déambulateur, par un acte volontaire et réfléchi de sa part, il agit sur la poignée de frein, par exemple en la serrant en même temps que la poignée de guidage, ce qui a pour effet d'exercer une traction sur le lien de traction 340, et donc de faire passer le tiroir 500, selon une translation dans la cavité 400, de sa seconde position (non représentée) à sa première position (illustrée sur la figure 1), c'est-à-dire de faire sortir les ergots 321, 322 des crans femelles et de permettre ainsi aux roues 11, 12 de rouler sur le sol Sd.

Si l'utilisateur veut par exemple se reposer, il lui suffit de relâcher la poignée de frein pour permettre au tiroir 310 de reprendre sa seconde position dans laquelle, comme décrit ci-dessus, les roues 11, 12 sont bloquées, et donc d'empêcher à nouveau le déambulateur de se déplacer sur le sol Sd.

La roulette pourra être montée de la même façon sur un pied de table roulante, un pied de matériel hospitalier, une valise, etc., ou en association avec tout autre type de meuble, et fonctionnera comme décrit ci-dessus.

Mais il faut surtout souligner un avantage présenté par la roulette selon l'invention par rapport notamment à celle selon le document antérieur référencé au préambule de la présente description.

En effet, la structure de la roulette selon l'invention rend son assemblage beaucoup plus facile que celui de la roulette antérieure. Cet avantage résulte du fait que le tiroir est monté en translation dans la cavité 400 et non pas en rotation comme dans la roulette de l'art antérieur, ce qui implique de ne pas avoir à positionner l'axe de rotation du levier qui est une opération que ne peut pas être facilement automatisée.

Pour effectuer l'assemblage de la roulette selon l'invention, il suffit d'enfoncer en force le tiroir 500 dans la cavité 400, jusqu'à ce que les extrémités des deux pattes 301, 602 viennent buter, par leurs courbures 612, 622, contre l'arbre 14. Du fait de leur élasticité naturelle et de leur forme adaptée, ces deux pattes s'écartent alors pour dépasser cet arbre et ensuite se refermer sur lui. Au cours de cette opération, le ressort 360 est comprimé.

Une fois cette opération terminée, il suffit de relier l'extrémité 341 du lien de traction 340 à la plaque 700 comme décrit ci-dessus en regard de la figure 1, puis de placer les deux roues sur l'arbre 14, les crans femelles portés par ces deux roues se trouvant alors automatiquement aptes à coopérer avec les crans mâles du tiroir 500.

## Revendications

1. Roulette à blocage comprenant :
- un carter (10),
- au moins deux roues (11, 12) aptes à prendre contact avec une surface donnée (Sd),
- des moyens pour monter les deux dites roues en rotation par rapport au carter sur un arbre (14) défini selon un premier axe (15) sensiblement parallèle à ladite surface (Sd), de façon qu'au moins une partie (10') du dit carter soit située entre les deux dites roues,
- un pivot (20) défini selon un second axe (21), ledit pivot étant monté en coopération avec ledit carter (10) de façon que ledit second axe soit à la fois sensiblement orthogonal au premier axe (15) et contenu dans un premier plan parallèle aux deux plans passant respectivement par les deux roues (11, 12) et situé entre ces deux plans, ledit pivot émergeant du carter (10) par une première face (406) du dit carter, et
- des moyens de blocage-déblocage (300) des deux roues (11, 12) par rapport au carter, ces dits moyens de blocage-déblocage comportant :
• au moins un ensemble de crans femelles (301, 302, 303, ...) réalisés sur au moins l'une des deux faces (305, 306) des dites roues (11, 12) qui sont tournées vers ladite partie (10') du carter (10),
• un levier (310) monté en coopération avec ledit carter (10),
• as moins un ergot mâle (321, 322) complémentaire des crans femelles du dit ensemble de crans femelles,
• des moyens (333) pour solidariser ledit ergot mâle avec ledit levier (310),
• ledit levier (310) étant en outre monté en coopération avec ledit carter (10) de façon qu'il soit apte à prendre au moins deux positions, une première position dans laquelle ledit ergot mâle (321, 322) ne coopère avec aucun des crans femelles (301, 302, 303, ...) et une seconde position dans laquelle ledit ergot mâle (321, 322) est positionné dans un des crans femelles,
• des moyens élastiques (330) pour tendre à amener constamment ledit levier (310) dans sa seconde position,
• un lien de traction (340), et
• des moyens (350) pour lier une première extrémité (341) du lien de traction (340) avec ledit levier (310) pour commander le passage du levier de sa seconde à sa première position,
**caractérisée par le fait qu'**elle comporte en outre :
• une cavité (400) réalisée dans ladite partie (10') du dit carter (10), ladite cavité comportant une face latérale (403) de forme sensiblement cylindrique et une ouverture (401) située sur une seconde face (402) de ladite partie (10') du carter opposée à la première face (406) d'où émerge ledit pivot (20), ladite cavité (400) étant en outre réalisée dans cette partie (10') de carter de façon que ledit arbre (14) traverse de part en part cette cavité,
et **par le fait que** :
• ledit levier est constitué par un tiroir (500) comportant une face avant (501), une face arrière (502) et une face latérale (503), la face latérale ayant une section transversale sensiblement complémentaire de la section transversale de la face latérale (403) de ladite cavité (400) définie dans un plan parallèle au dit premier axe (15) et perpendiculaire au second axe (21), de façon que le tiroir soit apte à coulisser en translation dans ladite cavité (400) entre ses deux première et seconde positions suivant une direction perpendiculaire au dit premier axe (15), la face arrière (502) du tiroir étant celle qui est en regard de l'intérieur (404) de ladite cavité (400).

2. Roulette selon la revendication 1, **caractérisée par le fait qu'**elle comporte deux pattes (601, 602) solidaires de la face arrière (502) du tiroir (500), ces deux pattes étant respectivement situées dans deux plans parallèles aux premier (15) et second (21) axes et distantes l'une de l'autre d'une distance au moins égale au diamètre du dit arbre (14), et étant agencées sur ladite face arrière (502) du tiroir de façon que, quand le tiroir est entre ses première et seconde positions, y compris lesdites positions, ledit arbre (14) soit situé entre les deux pattes.

3. Roulette selon la revendication 2, **caractérisée par le fait qu'**au moins l'une des deux pattes (601, 602) comporte une courbure rentrante (611, 612) tournée vers l'autre patte de façon que la distance entre l'extrémité libre de cette courbure et l'extrémité libre de l'autre patte soit inférieure au diamètre du dit arbre (14).

4. Roulette selon la revendication 2, **caractérisée par le fait que** chacune des deux pattes comporte une courbure rentrante (611, 612) tournée vers l'autre patte de façon que la distance entre les extrémités libres de ces deux courbures soit inférieure au diamètre du dit arbre (14).

5. Roulette selon l'une des revendications 3 et 4, **caractérisée par le fait qu'**elle comporte au moins une nervure (630, 631) réalisée dans ladite cavité (400), ladite nervure étant agencée de façon que, lors du déplacement du tiroir (500) de sa seconde position à sa première position, au moins l'une des deux pattes (601, 602) vienne en appui par glissement sur ladite nervure (630, 631), entre ladite nervure et l'arbre (14), pour qu'elle soit maintenue sensiblement constamment au contact du dit arbre (14).

6. Roulette selon l'une des revendications précédentes, **caractérisée par le fait que** les moyens élastiques (330) pour tendre à amener constamment ledit levier (310) dans sa seconde position sont constitués par un ressort en compression monté entre la face arrière (502) du tiroir (500) et ledit arbre (14).

7. Roulette selon l'une des revendications précédentes, **caractérisée par le fait que** moyens (350) pour lier une première extrémité (341) du lien de traction (340) avec ledit levier (310) comportent :
• une portion de plaque (700) solidaire en saillie du dit tiroir (500) de façon que cette dite portion de plaque soit en regard du dit carter et coupée par ledit second axe (21),
• un orifice traversant (701) réalisé dans ladite portion de plaque (700) en étant sensiblement centré sur ledit second axe (21), cet orifice traversant ayant une section au moins égale à celle du dit lien (340), la première extrémité (341) du dit lien étant passée dans ledit orifice traversant, et
• une tête d'épaulement (360) d'une section transversale supérieure à celle du dit orifice traversant et solidaire de la première extrémité (341) du dit lien (340), cette tête d'épaulement (360) étant positionnée en appui sur le bord de l'orifice traversant (701) qui est opposé à celui qui est en regard du carter (10).

## Patentansprüche

1. Feststellrolle, umfassend:
- ein Gehäuse (10),
- mindestens zwei Räder (11, 12), die geeignet sind, mit einer gegebenen Oberfläche (Sd) einen Kontakt herzustellen,
- Mittel zum drehbaren Montieren der zwei Räder in Bezug auf das Gehäuse an einer Welle (14), die entlang einer ersten Achse (15) definiert ist, die zu der Oberfläche (Sd) im Wesentlichen parallel ist, derart, dass sich mindestens ein Teil (10') des Gehäuses zwischen den zwei Rädern befindet,
- einen Drehzapfen (20), der entlang einer zweiten Achse (21) definiert ist, wobei der Drehzapfen in Zusammenwirkung mit dem Gehäuse (10) in einer Weise angeordnet ist, dass die zweite Achse im Wesentlichen senkrecht zu der ersten Achse (15) ist und in einer ersten Ebene liegt, die zu den beiden jeweiligen Ebenen, die durch die beiden Räder (11, 12) verlaufen, parallel ist und sich zwischen diesen beiden Ebenen befindet, wobei der Drehzapfen von dem Gehäuse (10) von einer ersten Fläche (406) des Gehäuses vorsteht, und
- Mittel (300) zum Sperren/Entsperren der zwei Räder (11, 12) in Bezug auf das Gehäuse, wobei diese Sperr-/Entsperrmittel umfassen:
• mindestens einen Satz vertiefter Einkerbungen (301, 302, 303, ...), die in mindestens einer der zwei Flächen (305, 306) der zu dem Teil (10') des Gehäuses (10) gewandten Räder (11, 12) ausgebildet sind,
• einen Hebel (310), der in Zusammenwirkung mit dem Gehäuse (10) montiert ist,
• mindestens einen zu den vertieften Kerben des Satzes vertiefter Kerben komplementären vorstehenden Nocken (321, 322),
• Mittel (333), um den vorstehenden Nocken mit dem Hebel (310) fest zu verbinden,
• wobei der Hebel (310) ferner in Zusammenwirkung mit dem Gehäuse (10) in einer Weise montiert ist, dass er geeignet ist, mindestens zwei Positionen einzunehmen, eine erste Position, in der der vorstehende Nocken (321, 322) mit keiner der vertieften Kerben (301, 302, 303, ...) zusammenwirkt, und eine zweite Position, in der der vorstehende Nocken (321, 322) in einer der vertieften Kerben positioniert ist,
• elastische Mittel (330), die gespannt sind, um den Hebel (310) ständig in seine zweite Position zu stellen,
• ein Zugverbindungsteil (340) und
• Mittel (350) zum Verbinden eines ersten Endes (341) des Zugverbindungsteils (340) mit dem Hebel (310), um die Umstellung des Hebels von seiner zweiten in seine erste Position zu betätigen,
**dadurch gekennzeichnet, dass** es ferner umfasst:
• einen Hohlraum (400), der in dem Teil (10') des Gehäuses (10) ausgebildet ist, wobei der Hohlraum eine Seitenfläche (430) mit im Wesentlichen zylindrischer Form und eine Öffnung (401) umfasst, die in einer zweiten Fläche (402) des Teils (10') des Gehäuses gegenüber der ersten Fläche (406) angeordnet ist, von wo der Drehzapfen (20) vorsteht, wobei der Hohlraum (400) ferner in diesem Teil (10') des Gehäuses in einer Weise ausgebildet ist, dass die Welle (14) diesen Hohlraum von einer Seite zur anderen durchquert,
und dadurch, dass:
• der Hebel durch einen Einschub (500) gebildet ist, der eine vordere Fläche (501), eine hintere Fläche (502) und eine seitliche Fläche (503) aufweist, wobei die seitliche Fläche einen Querschnitt besitzt, der komplementär ist zu dem Querschnitt der seitlichen Fläche (403) des Hohlraums (400), der in einer Ebene parallel zu der ersten Achse (15) und senkrecht zu der zweiten Achse (21) definiert ist, derart, dass der Einschub in dem Hohlraum (400) zwischen seiner ersten und seiner zweiten Position in einer Richtung senkrecht zu der ersten Achse (15) gleitend verschiebbar ist, wobei die hintere Fläche (502) des Einschubs jene ist, die sich gegenüber dem Innenraum (404) des Hohlraums (400) befindet.

2. Rolle nach Anspruch 1, **dadurch gekennzeichnet, dass** sie zwei mit der hinteren Fläche (502) des Einschubs (500) fest verbundene Laschen (601, 602) umfasst, wobei diese zwei Laschen in zwei Ebenen angeordnet sind, die zu der ersten Achse (15) und der zweiten Achse (21) parallel sind und voneinander um eine Strecke beabstandet sind, die mindestens gleich dem Durchmesser der Welle (14) ist, und an der hinteren Fläche (502) des Einschubs in einer Weise angeordnet sind, dass dann, wenn sich der Einschub zwischen seiner ersten und seiner zweiten Position einschließlich dieser Positionen befindet, die Welle (14) zwischen den zwei Laschen angeordnet ist.

3. Rolle nach Anspruch 2, **dadurch gekennzeichnet, dass** mindestens eine der zwei Laschen (601, 602) eine zu der anderen Lasche gewandte Krümmung (611, 612) nach innen aufweist, derart, dass der Abstand zwischen dem freien Ende dieser Krümmung und dem freien Ende der anderen Lasche kleiner als der Durchmesser der Welle (14) ist.

4. Rolle nach Anspruch 2, **dadurch gekennzeichnet, dass** jede der zwei Laschen eine zu der anderen Lasche gewandte Krümmung (611, 612) nach innen aufweist, derart, dass der Abstand zwischen den freien Enden dieser zwei Krümmungen kleiner als der Durchmesser der Welle (14) ist.

5. Rolle nach einem der Ansprüche 3 und 4, **dadurch gekennzeichnet, dass** es mindestens eine Rippe (630, 631) aufweist, die in dem Hohlraum (400) ausgebildet ist, wobei die Rippe in einer Weise angeordnet ist, dass bei einer Verlagerung des Einschubs (500) von seiner zweiten Position in seine erste Position sich wenigstens eine der zwei Laschen (601, 602) durch Gleiten auf der Rippe (630, 631) zwischen der Rippe und der Welle (14) abstützt, damit sie im Wesentlichen ständig in Kontakt mit der Welle (14) gehalten wird.

6. Rolle nach einem der vorhergehenden Ansprüche, **dadurch gekennzeichnet, dass** die elastischen Mittel (330), die gespannt sind, um den Hebel (310) ständig in seine zweite Position zu stellen, durch eine Druckfeder gebildet sind, die zwischen der hinteren Fläche (502) des Einschubs (500) und der Welle (14) angeordnet ist.

7. Rolle nach einem der vorhergehenden Ansprüche, **dadurch gekennzeichnet, dass** Mittel (350) zum Verbinden eines ersten Endes (341) des Zugverbindungsteils (340) mit dem Hebel (310) umfassen:
- einen Plattenabschnitt (700), der mit dem Einschub (500) vorstehend verbunden ist, derart, dass dieser Plattenabschnitt sich gegenüber dem Gehäuse befindet und von der zweiten Achse (21) geschnitten wird,
- eine Durchgangsöffnung (701), die in dem Plattenabschnitt (700) ausgebildet ist und auf die zweite Achse (21) im Wesentlichen zentriert ist, wobei die Durchgangsöffnung einen Querschnitt hat, der mindestens gleich jenem der Verbindung (340) ist, wobei das erste Ende (341) der Verbindung die Durchgangsöffnung durchläuft, und
- einen Schulterkopf (360), der einen Querschnitt hat, der größer als jener der Durchgangsöffnung ist, und der mit dem ersten Ende (341) der Verbindung (340) fest verbunden ist, wobei dieser Schulterkopf (360) abstützend auf dem Rand der Durchgangsöffnung (701) angeordnet ist, der sich gegenüber jenem befindet, der dem Gehäuse (10) zugewandt ist.

## Claims

1. A lockable castor comprising:
• a casing (10);
• at least two wheels (11, 12) suitable for coming into contact with a given surface (Sd);
• mean for mounting said two wheels to rotate relative to the casing on a shaft (14) defined along a first axis (15) that is substantially parallel to said surface (Sd), in such a manner that at least a portion (10') of said casing is situated between said two wheels;
• a pivot (20) defined along a second axis (21), said pivot being mounted to co-operate with said casing (10) in such a manner that said second axis is both substantially orthogonal to the first axis (15), being contained in a first plane parallel to the two planes respectively occupied by the two wheels (11, 12), and is also situated between these two planes, said pivot emerging from the casing (10) via a first face (406) of said casing; and
• locking-and-unlocking means (300) for locking and unlocking the two wheels (11, 12) relative to the casing, said locking-and-unlocking means comprising:
• at least one set of female notches (301, 302, 303, ...) made in at least one of the two faces (305, 306) of said wheels (11, 12) that face towards said portion (10') of the casing (10);
• a lever (310) mounted to co-operate with said casing (10);
• at least one male lug (321, 322) complementary to the female notches of said set of female notches;
• means (333) for securing said male lug to said lever (310);
• said lever (310) also being mounted to co-operate with said casing (10) in such a manner as to be suitable for occupying at least two positions, a first position in which said male lug (321, 322) does not cooperate with any of the female notches (301, 302, 303, ...) and a second position in which said male lug (321, 322) is positioned in one of the female notches;
• resilient means (330) constantly urging said lever (310) towards its second position;
• a pull connection (340); and
• means (350) for connecting a first end (341) of the pull connection (340) to said lever (310) in order to cause the lever to pass from its second position to its first position;
the castor being **characterized by** the fact that it further comprises:
• a cavity (400) made in said portion (10') of said casing (10), said cavity including a side face (403) of substantially cylindrical shape and an opening (401) situated in a second face (402) of said portion (10') of the casing opposite from the first face (406) from which said pivot (20) emerges, said cavity (400) also being made in said casing portion (10') so that said shaft (14) passes right through said cavity; and
by the fact that:
• said lever is constituted by a slide (500) having a front face (501), a rear face (502), and a side face (503), the side face having a cross-section defined in a plane parallel to said first axis (15) and perpendicular to the second axis (21) that is substantially complementary to the cross-section of the side face (403) of said cavity (400), in such a manner that the slide is suitable for sliding in translation in said cavity (400) between its first and second positions along a direction perpendicular to said first axis (15), the rear face (502) of the slide being the face that faces the inside (404) of said cavity (400).

2. A castor according to claim 1, **characterized by** the fact that it includes two tabs (601, 602) secured to the rear face (502) of the slide (500), these two tabs being situated in two respective planes that are parallel to the first and second axes (15 and 21) and that are spaced apart from each other by a distance not less than the diameter of said shaft (14), and the tabs being arranged on said rear face (502) of the slide in such a manner that when the slide is between its first and second positions, and when it is in said positions, said shaft (14) is situated between the two tabs.

3. A castor according to claim 2, **characterized by** the fact that at least one of the two tabs (601, 602) includes a re-entrant portion of curvature (611,612) facing towards the other tab so that the distance between the free end of the portion of curvature and the free end of the other tab is less than the diameter of the shaft (14).

4. A castor according to claim 2, **characterized by** the fact that each of the two tabs includes a respective re-entrant portion of curvature (611, 612) facing towards the other tab so that the distance between the free ends of these two portions of curvature is less than the diameter of the shaft (14).

5. A castor according to claim 3 or claim 4, **characterized by** the fact that it includes at least one spline (630, 631) made in said cavity (400), said spline being arranged in such a manner that, during the movement of the slide (500) from its second position towards its first position, at least one of the two tabs (601, 602) comes to bear in sliding against said spline (630, 631) between said spline and the shaft (14) so that it is held substantially constantly in contact with said shaft (14)

6. A castor according to any preceding claim, **characterized by** the fact that the resilient means (330) for constantly urging said lever (310) towards its second position are constituted by a compression spring mounted between the rear face (502) of the slide (500) and said shaft (14).

7. A castor according to any preceding claim, **characterized by** the fact that means (350) for connecting a first end (341) of the pull connection (340) to said lever (310) comprise:
• a plate portion (700) secured to project from said slide (500) in such a manner that said plate portion faces said casing and is intersected by said second axis (21);
• a through orifice (701) made in said plate portion (700) being substantially centered on said second axis (21), the through orifice having a section not less than the section of said connection (340), the first end (341) of said connection being passed through said through orifice; and
• a shoulder head (360) of cross-section greater than the cross-section of said through orifice and secured to the first end (341) of said connection (340), said shoulder head (360) being positioned to bear against the edge of the through orifice (701) that is opposite from its edge facing the casing (10).
